# EUROPEAN PATENT SPECIFICATION

(11) **EP 2 390 146 B1**
(45) Date of publication and mention of the grant of the patent: **31.07.2013**
(21) Application number: 11167624.3
(22) Date of filing: 26.05.2011
(51) Int. Cl.: B60R 22/36

(54) **Webbing take-up device**
Gurtaufnahmevorrichtung
Dispositif de tension de sangle

(30) Priority: 27.05.2010 JP 2010122006
(43) Date of publication of application: 30.11.2011
(73) Proprietor: Kabushiki Kaisha Tokai Rika Denki Seisakusho, Ohguchi-cho Niwa-gun Aichi 480-0134 (JP)
(72) Inventor: Tatsuma, Atsushi, Niwa-gun,, Aichi 480-0134 (JP); Sumiyashiki, Akira, Niwa-gun,, Aichi 480-0134 (JP)
(74) Representative: TBK

(56) References cited:
- EP-A2- 0 156 337
- WO-A1-2007/000226
- DE-A1-102006 048 674
- US-A1- 2004 149 852
- US-A1- 2009 218 432
- US-B1- 6 305 633

## Description

### BACKGROUND OF THE INVENTION

### Field of the Invention

The present invention relates to a webbing take-up device that takes up a webbing applied to a vehicle passenger.

### Related Art

In a webbing take-up device disclosed in Japanese Patent Application Laid-open No. 2009-202809(US-A-2009/0 218 432), when a spool is abruptly rotated in a drawing-out direction, a lock plate provided in a movement groove of the spool is meshed with ratchet teeth of a frame. Thereby, rotation of the spool into the drawing-out direction is regulated.

Further, when the lock plate is meshed with the ratchet teeth of the frame, one side surface of the movement groove of the spool is engaged with the lock plate, and hence receiving load from the lock plate. Thus, it is necessary for the spool to have sufficient strength on the one side surface of the movement groove.

Here, the spool is provided with a slit through which a proximal end portion of the webbing is made to pass. So, it is further necessary for the spool to have sufficient strength.

### SUMMARY OF THE INVENTION

In consideration of the above-mentioned facts, the present invention has an object to provide a webbing take-up device capable of enhancing strength of a take-up shaft even though the take-up shaft is provided with a slit.

A webbing take-up device of a first aspect of the resent invention includes: a take-up shaft that is provided with a slit through which a webbing to be applied to a vehicle passenger passes, the webbing being taken up on the take-up shaft by the take-up shaft being rotated in a take-up direction, and the take-up shaft being rotated in a drawing-out direction by the webbing being drawn out; a housing chamber that is provided integrally with an end portion of the take-up shaft in an axial direction of the take-up shaft, the housing chamber having an opening opened to an outer side in a radial direction of the take-up shaft, and having one side surface at a side of the take-up direction, an end portion of the one side surface at a side toward the opening begin arranged at a position which is away from a location where the slit is formed in a circumferential direction of the take-up shaft; and a lock member that is housed in the housing chamber, the lock member being engaged with the one side surface of the housing chamber at a predetermined occasion to regulate rotation of the take-up shaft in the drawing-out direction.

The webbing take-up device according to a second aspect of the resent invention is that, in the webbing take-up device according to the first aspect, the housing chamber further includes another side surface at a side toward the drawing-out direction, and the one side surface and the other side surface are away (become more distant) from each other as they go toward the outer side (approaching the outer side thereof) in the radial direction of the take-up shaft, and the one side surface and the other side surface are inclined with respect to a penetrating direction of the slit.

In the webbing take-up device according to the first aspect of the present invention, the webbing to be applied to the vehicle passenger is made to pass through the slit provided in the take-up shaft. The take-up shaft is rotated in the take-up direction, thereby the webbing is taken up about the take-up shaft. Further, the webbing is drawn out from the take-up shaft, thereby the take-up shaft is rotated in the drawing-out direction. Moreover, the housing chamber is provided integrally at the end portion in the axial direction of the take-up shaft, and the housing chamber is opened to the outer side in the radial direction of the take-up shaft.

The lock member is housed in the housing chamber, and the one side surface at the take-up direction side of the housing chamber is engaged with the lock member in the predetermined occasion, and the rotation of the take-up shaft in the drawing-out direction is regulated.

In this context, the end portion at the side of the opening (the opening-side end portion) of the one side surface of the housing chamber is arranged at such a position as to be away (separated) from the slit-formed location in the circumferential direction of the take-up shaft.

Thus, a solid part (wall thickness part) which passes the one side surface of the housing chamber of the take-up shaft and is along the axial direction becomes larger, and hence strength of the take-up shaft can be enhanced.

It is possible that, in the first aspect, the webbing take-up device further includes a lock portion that is provided integrally with the end portion of the take-up shaft in the axial direction, and the housing chamber is formed in the lock portion such that an outer side in the axial direction of the housing chamber is closed by a wall portion at the outer side in the axial direction of the lock portion, and the housing chamber has the one side surface and another side surface at a side toward the drawing-out direction.

In this structure, the outer side of the housing chamber in the axial direction of the take-up shaft is closed. Thus, strength of the housing chamber can be enhanced, and the strength of the take-up shaft can be further enhanced. Moreover, the lock member can be suppressed from being disengaged from the housing chamber to the outer side in the axial direction of the take-up shaft.

In the webbing take-up device according to the second aspect of the present invention, the housing chamber further includes another side surface at a side toward the drawing-out direction, and the one side surface and the other side surface become more distant from each other approaching the outer side thereof in the radial direction of the take-up shaft, and the one side surface and the other side surface are inclined with respect to a penetrating direction of the slit.

Thus, in a case where the take-up shaft is formed by molding, even if a part for forming the housing chamber is provided to the mold for forming shape of the take-up shaft, it is possible that the demolding directions of the mold are only two directions. As a result, a mold structure can be suppressed from being more complicated.

Further, it is possible in the first aspect that the one side surface is formed to be parallel to a penetration direction of the slit.

Further, in this case, it is possible that the other side surface is formed to be parallel to the penetration direction of the slit.

Further, it is possible in the first aspect that the one side surface is formed to be inclined with respect to a penetration direction of the slit.

Further, in this case, it is possible that a sliding surface, which surface-abuts with and slides on the one side surface, is formed at the lock member, and the one side surface intersects with a side surface of the slit extending in the penetration direction of the slit at an intersecting portion when viewed in the axial direction.

Further, in this case, it is possible that at the predetermined occasion, the one side surface is engaged with the sliding surface in a range which is from the end portion of the one side surface at the side toward the opening to the intersecting portion.

### BRIEF DESCRIPTION OF THE DRAWINGS

Embodiments of the invention will be described in detail with reference to the following figures, wherein:
Figs. 1A and 1B illustrate a spool of a webbing take-up device according to an embodiment of the present invention; specifically, Fig. 1A is a side view of a side surface of the spool, and Fig. 1B is a plan view of a part of the spool;
Fig. 2 is an exploded perspective view of the webbing take-up device according to the embodiment of the present invention;
Figs. 3A and 3B illustrate a lock mechanism of the webbing take-up device according to the embodiment of the present invention; specifically, Fig. 3A is a plan view illustrating a state in which a lock plate is spaced apart from ratchet teeth, and Fig. 3B is a plan view illustrating a state in which the lock plate meshes with the ratchet teeth; and

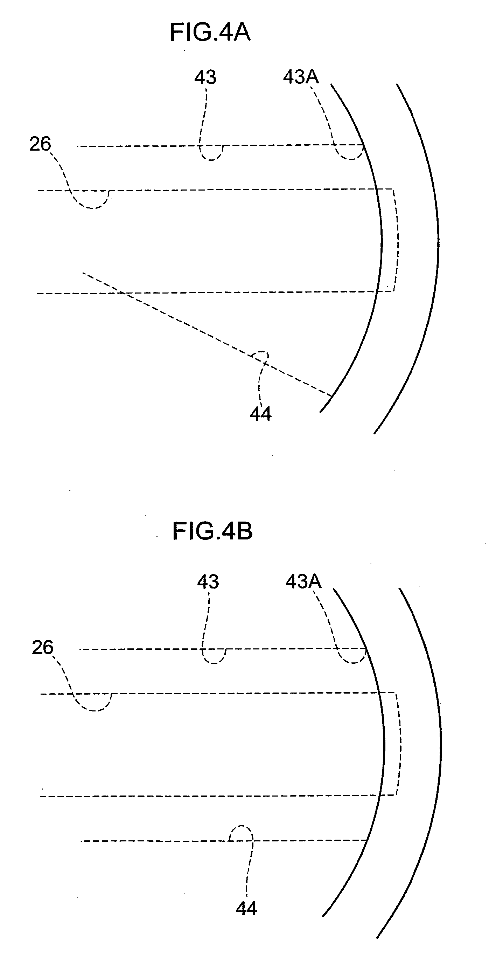

Figs. 4A and 4B illustrate a side simple view of a spool of a webbing take-up device according to a modified embodiment of the present invention.

### DETAILED DESCRIPTION OF THE INVENTION

### [Embodiment of the present invention]

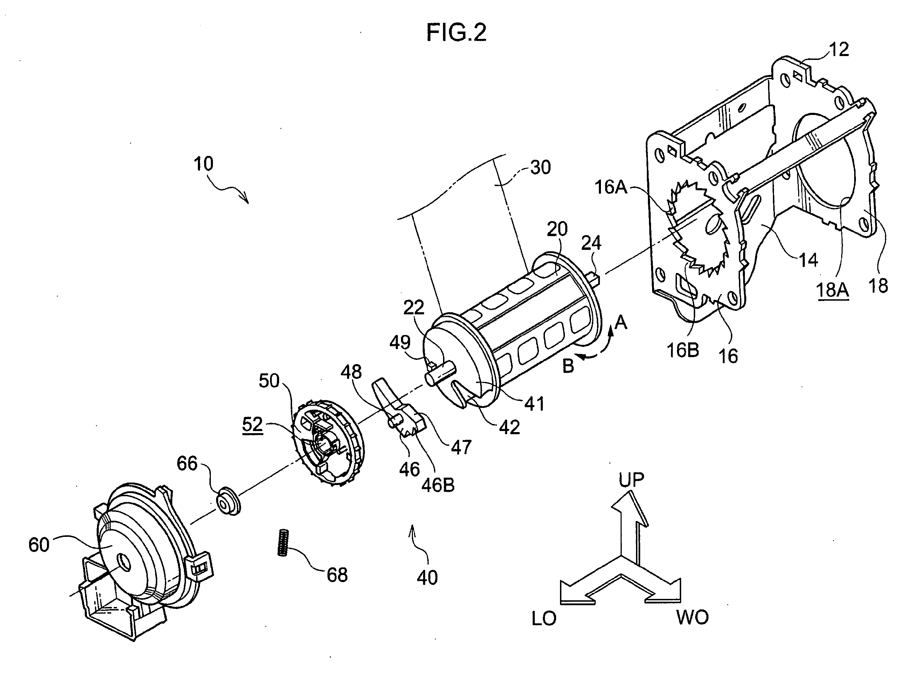

Fig. 2 shows an overall structure of a webbing take-up device 10 according to an embodiment of the present invention by an exploded perspective view. Note that, in the figure, one side in a front and rear direction of a vehicle is indicated by an arrow LO, one side in a width direction of the vehicle is indicated by an arrow WO, and a vehicle upper side is indicated by an arrow UP.

As illustrated in Fig. 2, the webbing take-up device 10 includes a frame 12. The frame 12 is constituted by a substantially plate-like back plate 14 and a leg plate 16 and a leg plate 18 extending integrally and respectively from both ends in a width direction of the back plate 14. The back plate 14 is fixed to a vehicle body with fastening members (not shown in the drawings) such as bolts, thereby the webbing take-up device 10 is attached to the vehicle body. The leg plate 16 and the leg plate 18 are respectively provided with a circular arrangement hole 16A and a circular arrangement hole 18A formed therethrough. Ratchet teeth 16B (inner teeth) are formed on an outer periphery of the arrangement hole 16A.

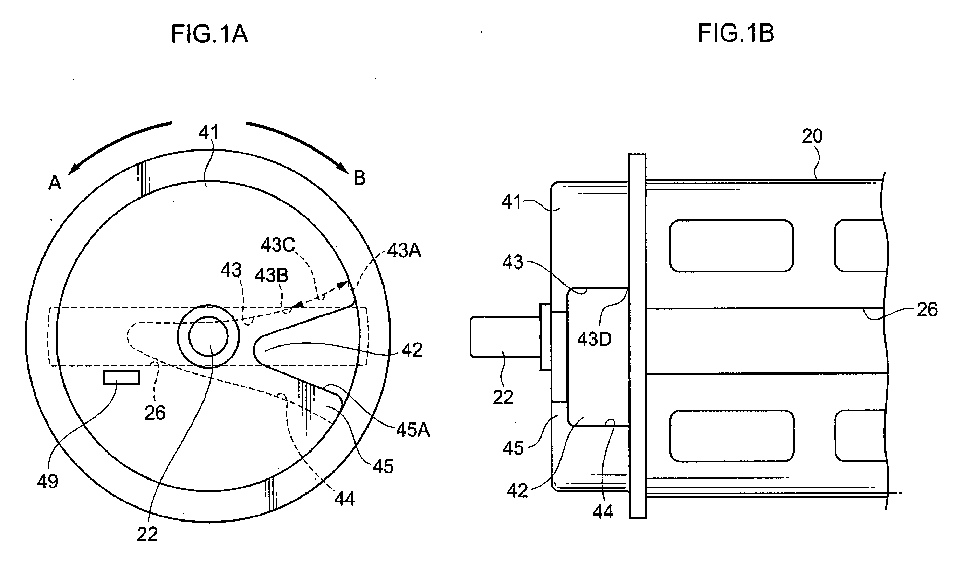

As illustrated in Figs. 1A, 1B and 2, a spool 20 as a take-up shaft manufactured by die-casting or the like is rotatably arranged between the leg plate 16 and the leg plate 18. As a whole, the spool 20 has a drum-like shape, and the spool 20 is provided with an elongated slit 26 penetrate-formed therethrough along a radial (diameter) direction. The slit 26 is constituted so that a longitudinal direction of the slit 26 is parallel to an axial direction of the spool 20. Under a state in which a proximal end portion of a webbing 30 formed in a long-belt-like shape has been made to pass through the slit 26, pulling out of the webbing 30 from the slit 26 is locked. In this manner, the proximal end portion of the webbing 30 is coupled to the spool 20.

Upon rotating the spool 20 in one direction about an axis thereof (it is arrow A direction in Fig. 2, hereinafter, this direction is referred to as "take-up direction"), the webbing 30 is taken up from the proximal end side thereof around an outer peripheral portion of the spool 20 in a layered manner. Meanwhile, when the webbing 30 is pulled from a leading end side of the webbing 30, the webbing 30 is drawn out while the spool 20 is rotated in accordance therewith in another direction about the axis of the spool 20 (it is arrow B direction in Fig. 2, hereinafter, this direction is referred to as "drawing-out direction").

As illustrated in Fig. 2, a substantially columnar-cylindrical support shaft 22 is provided integrally on a leg-plate 16 side of the spool 20. The support shaft 22 is projected to an outside of the leg plate 16 of the frame 12 through the arrangement hole 16A. A support shaft 24 which is in substantially rectangular column shape is provided integrally on a leg-plate 18 side of the spool 20. The support shaft 24 is arranged coaxially with the support shaft 22 and is projected to an outside of the leg plate 18 of the frame 12 through the arrangement hole 18A.

A spiral spring (not shown in the drawings) as a take-up member is arranged on the outside of the leg plate 18 of the frame 12. An outer side end in a spiral direction of the spiral spring is coupled to the leg plate 18 (the frame 12). An inner side end in the spiral direction of the spiral spring is fixed to the support shaft 24 of the spool 20. The spiral spring urges the spool 20 in the take-up direction.

A lock mechanism 40 is provided on the outside of the leg plate 16 of the frame 12. The lock mechanism 40 includes a sensor holder 60. The sensor holder 60 is formed in such a recessed shape which opens to the leg-plate 16 side, and the sensor holder 60 is fixed to the leg plate 16.

As illustrated in Figs. 1 and 2, a lock base 41 is provided integrally with an end portion on the leg-plate 16 side of the spool 20. The support shaft 22 is projected from the lock base 41. The spool 20, the support shaft 22, and the lock base 41 are configured to be rotatable coaxially and integrally with each other. A bush 66 is fixed to a leading end portion of the support shaft 22. The bush 66 is rotatably supported by the sensor holder 60, thereby the support shaft 22 is rotatably supported by the sensor holder 60 through the bush 66.

The lock base 41 is provided with an engagement convex portion 49, and the engagement convex portion 49 corresponds to a return spring 68 described later. Further, the lock base 41 is provided with a housing chamber 42. The housing chamber 42 has an opening that is opened to an outer side in the radial direction of the spool 20, and is opened at a portion of an outer side in the axial direction of the spool 20 (at a portion corresponding to a groove 45A mentioned later). A side wall 45 is formed on the outer side of the housing chamber 42 in the radial direction of the spool 20. The housing chamber 42 is closed on the outer side thereof in the axial direction of the spool 20 by the side wall 45, and an outer surface of the side wall 45 in the axial direction of the spool 20 is formed to be flush with the lock base 41. The side wall 45 is provided with the groove 45A, and a guide protrusion 48 of a lock plate 46 described later is made to pass through the groove 45A.

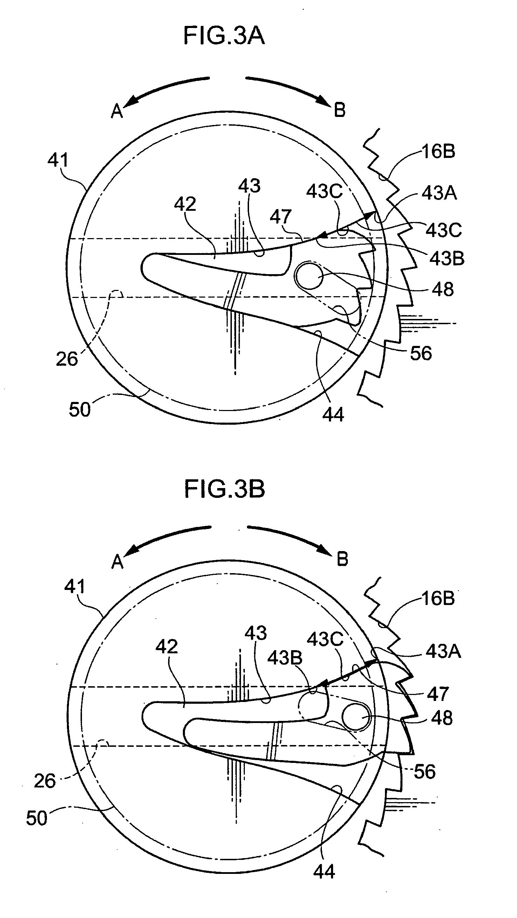

A side surface (inner surface) 43 is formed on a take-up direction side of the housing chamber 42, and an opening-side end portion 43A of the side surface 43 is arranged at a position away from the slit 26 (a position (location) where the slit 26 is formed) in a circumferential direction of the spool 20 (when viewed from the axial direction of the spool 20, the opening-side end portion 43A is arranged at a position not to overlap the slit 26). Further, the side surface 43 is inclined with respect to a penetration direction (right-left direction in Figs. 3A and 3B) of the slit 26 in such a direction as to be away from the slit 26 as it goes toward the outer side in the radial direction of the spool 20, and intersects with a side surface (which is a one side surface extending in the penetration direction of the slit 26) of the slit 26 at an intersecting portion 43B when viewed from the axial direction of the spool 20 (refer to Fig. 1A). Thus, in the side wall 43, a range 43C from the opening-side end portion 43A to the intersecting portion 43B (refer to Fig. 1A) is away from the slit 26 in the circumferential direction of the spool 20 (when viewed from the axial direction of the spool 20, the range 43C from the opening-side end portion 43A to the intersecting portion 43B is arranged at a position as not to overlap the slit 26).

A side surface (inner surface) 44 is formed on a drawing-out direction side of the housing chamber 42. The side surface 44 is inclined in such a direction as to be away from the slit 26 as it goes toward the outer side in the radial direction of the spool 20, and inclined with respect to a penetration direction of the slit 26 in such a direction as to be away from the side surface 43 as it goes toward the outer side in the radial direction of the spool 20.

As illustrated in Figs. 2, 3A and 3B, the plate-like lock plate 46 as a locking member is arranged movably inside the housing chamber 42. The guide protrusion 48 having a columnar-cylindrical shape is formed integrally with the lock plate 46, and the guide protrusion 48 is projected from the lock plate 46 to the outside of the leg plate 16 of the frame 12 through the groove 45A of the housing chamber 42.

A sliding surface 47 is formed at the lock plate 46 on a take-up direction side and an outer side thereof in the radial direction of the spool 20. The sliding surface 47 is held in surface contact (abut) with the side surface 43 of the housing chamber 42. Moreover, ratchet teeth 46B are formed at one end of the lock plate 46. By sliding of the sliding surface 47 of the lock plate 46 to the outer side in the radial direction of the spool 20 with respect to the side surface 43, the ratchet teeth 46B are made to be capable of meshing with the ratchet teeth 16B of the leg plate 16.

As illustrated in Fig. 2, a V-gear 50 as a rotator is arranged between the sensor holder 60 and the lock base 41, and the V-gear 50 is housed in the sensor holder 60. The V-gear 50 is formed in a disk shape, and a through-hole 52 is provided at a central portion of the V-gear 50. Between the lock base 41 and the bush 66, the support shaft 22 of the spool 20 is made to pass through the through-hole 52. Thereby, the V-gear 50 is coaxially and rotatably attached to the support shaft 22 of the spool 20.

An engagement protrusion (not shown in the drawings) is provided on a side surface on a lock-base 41 side of the V-gear 50. The return spring 68 is bridged between the engagement protrusion and the engagement convex portion 49 of the lock base 41 which is described above. A compression coil spring is provided as the return spring 68 so as to urge the V-gear 50 in the drawing-out direction with respect to the lock base 41.

Further, as illustrated in Figs. 3A and 3B, an elongated guide groove 56 is formed in the side surface on the lock-base 41 side of the V-gear 50, and a leading end portion of the guide protrusion 48 of the lock plate 46 described above is inserted in the guide groove 56. Thus, the guide protrusion 48 is engaged with (positioned at) one end of the guide groove 56 by an urging force of the return spring 68 (the state illustrated in Fig. 3A). By the guide protrusion 48 being engaged with the one end of the guide groove 56, rotation, which is performed by the return spring 68, of the V-gear 50 in the drawing-out direction with respect to the lock base 41 is locked. In normal state, the V-gear 50 is made to be capable of rotating integrally with the lock base 41 (the spool 20).

Here, when a vehicle abruptly decelerates and when the webbing 30 is abruptly drawn out from the spool 20 and the spool 20 is abruptly rotated in the drawing-out direction (a predetermined occasion), the rotation of the V-gear 50 in the drawing-out direction is regulated. Thus, the lock base 41 (the spool 20) is rotated relative to the V-gear 50 in the drawing-out direction against the urging force of the return spring 68 (the V-gear 50 is rotated relative to the lock base 41 (the spool 20) in the take-up direction), thereby the guide protrusion 48 of the lock plate 46 is moved from the one end of the guide groove 56 of the V-gear 50 to the other end thereof. As a result, the sliding surface 47 of the lock plate 46 is slid to an outer side in the radial direction of the lock base 41 with respect to the side surface 43 of the housing chamber 42 (moved from the state illustrated in Fig. 3A to a state illustrated in Fig. 3B). Thus, the ratchet teeth 46B of the lock plate 46 are meshed with the ratchet teeth 16B of the leg plate 16 of the frame 12, thereby rotation of the lock plate 46 in the drawing-out direction is regulated (the state illustrated in Fig. 3B).

When the ratchet teeth 46B of the lock plate 46 are meshed with the ratchet teeth 16B of the leg plate 16, the side surface 43 of the housing chamber 42 is abutted to the sliding surface 47 of the lock plate 46 in the range 43C from the opening-side end portion 43A to the intersecting portion 43B. Thereby, rotation of the spool 20 (the lock base 41) in the drawing-out direction is regulated (rotation of the lock plate 46 and the spool 20 in the take-up direction is allowed).

Next, description is made of operation of this embodiment.

In the webbing take-up device 10, when the webbing, 30 in a state of being taken up by the spool 20 is pulled to the leading end side against an urging force of the spiral spring, the webbing 30 is drawn out from the spool 20, and the spool 20 is rotated in the drawing-out direction.

The webbing 30 drawn out is strapped around a passenger's body. Then, for example, a tongue plate provided in an intermediate portion in the longitudinal direction of the webbing 30 is held by a buckle device provided laterally to a vehicle seat, thereby the webbing 30 is applied to the passenger's body.

When the vehicle abruptly decelerates and when the webbing 30 is abruptly drawn out from the spool 20, and the spool 20 is abruptly rotated in the drawing-out direction, the rotation of the V-gear 50 in the drawing-out direction is regulated. Then, the lock base 41 (the spool 20) is rotated relative to the V-gear 50 in the drawing-out direction against the urging force of the return spring 68 (the V-gear 50 is rotated relative to the lock base 41 in the take-up direction).

When the lock base 41 (the spool 20) is rotated relative to the V-gear 50 in the drawing-out direction, the guide protrusion 48 of the lock plate 46 is moved from the one end to the other end of the guide groove 56 of the V-gear 50. In this case, the sliding surface 47 of the lock plate 46 is slid to the outer side in the radial direction of the lock base 41 with respect to the side surface 43 of the housing chamber 42. Thus, the ratchet teeth 46B of the lock plate 46 are meshed with the ratchet teeth 16B of the leg plate 16, and the rotation of the lock plate 46 into the drawing-out direction is regulated (the state illustrated in Fig. 3B).

At a time that the rotation of the lock plate 46 in the drawing-out direction is regulated, the side surface 43 of the housing chamber 42 of the spool 20 is engaged with the sliding surface 47 of the lock plate 46 in the range 43C from the opening-side end portion 43A to the intersecting portion 43B. Thereby, the rotation of the spool 20 in the drawing-out direction is regulated, and the passenger's body is reliably bound and held by the webbing 30.

At this time (state), a pulling force from the webbing 30 causes a rotational force in the drawing-out direction to act on the spool 20. Meanwhile, the side surface 43 of the housing chamber 42 of the spool 20 is engaged with the sliding surface 47 of the lock plate 46 in the range 43C from the opening-side end portion 43A to the intersecting portion 43B. Thus, a force from the sliding surface 47 of the lock plate 46 toward the take-up direction side is applied on the side surface 43 of the spool 20. Therefore, with respect to an end portion 43D (refer to Fig. 1B) on an inner side of the side surface 43 in the axial direction of the spool 20, a force in the drawing-out direction is applied on one side in the axial direction of the spool 20 (the webbing 30 side) of the end portion 43D, and a force in the take up direction is applied on the other side in the axial direction of the spool 20 (the lock-plate 46 side) of the end portion 43D. In this manner, a torsional force is applied on the end portion 43D on the inner side of the side surface 43 in the axial direction of the spool 20.

Here, the range 43C (including opening-side end portion 43A) of the side surface 43 of the housing chamber 42 is arranged at a position as to be away from the slit 26 of the spool 20 in the circumferential direction of the spool 20 (when viewed from the axial direction of the spool 20, at least the opening-side end portion 43A is arranged at a position as not to overlap the slit 26).

Thus, a solid part (wall thickness part) which passes the range 43C and is along the axial direction of the spool 20 becomes larger, and hence strength of the spool 20 can be enhanced.

Further, the outer side of the housing chamber 42 in the axial direction of the spool 20 is closed by the side wall 45. Thus, the side surface 43 and the side surface 44 of the housing chamber 42 are bridged by the side wall 45. As a result, strength of the housing chamber 42 of the spool 20 can be enhanced, and hence the strength of the spool 20 can be further enhanced.

Still further, the side wall 45 regulates movement of the lock plate 46 to the outer side in the axial direction of the spool 20. Thus, the lock plate 46 can be suppressed from being disengaged from the housing chamber 42 to the outer side in the axial direction of the spool 20.

Yet further, the side surface 43 and the side surface 44 of the housing chamber 42 are away from each other as they go toward the outer side in the radial direction of the spool 20, and inclined in such directions as to be away from the slit 26 of the spool 20. Thus, in a case where the spool 20 is formed by a mold (die), even if a part for forming the housing chamber 42 is provided to the mold for forming a shape (outline) of the spool 20, it is possible that the demolding directions of the mold are only two directions. As a result, a mold structure can be suppressed from being more complicated.

Note that, in this embodiment, the side surface 43 and the side surface 44 are constituted so as to be inclined with respect to the slit 26 of the spool 20. Alternatively, one of the side surface 43 and the side surface 44, or both of them may be parallel to the slit 26 (the penetration direction of the slit 26). Also in this case, when the spool 20 is formed by the mold, it is possible that the demolding directions of the mold are only two directions. In particular, under a state in which the side surface 43 is away from the slit 26 in the circumferential direction of the spool 20, if the side surface 43 is caused to be parallel with the slit 26, the side surface 43 and the slit 26 do not overlap each other when viewed from the axial direction of the spool 20 (the intersecting portion 43B does not exist). Thus, the strength of the spool 20 can be further enhanced.

Further, in this embodiment, a boundary portion between the side surface 43 and an inner side surface of the housing chamber 42 in the axial direction of the spool 20 may be formed in a curved shape (in particular, circular-arc shape). Thereby, stress concentration on the boundary portion between the side surface 43 and the inner side surface of the housing chamber 42 in the axial direction of the spool 20 can be alleviated. As a result, the strength of the spool 20 can be further enhanced.

In a webbing take-up device, a housing chamber is provided integrally at an axial-direction end portion of the spool, and opens to an outer-side in a radial-direction of the spool. A lock plate is housed in the housing chamber, and a side surface of the housing chamber is engaged with the lock plate at a predetermined occasion, and rotation of the spool in a drawing-out direction is regulated. An opening-side end portion of the side surface is arranged at a position away from a slit in a circumferential-direction of the spool. Thus, a wall part passing the side surface and being along the axial-direction becomes larger, so strength of the spool can be enhanced. Further, an outer-side of the housing chamber in the axial-direction is closed, so strength of the housing chamber can be enhanced, with the result that the strength of the spool can be further enhanced.

## Claims

1. A webbing take-up device comprising:
a take-up shaft (20) that is provided with a slit (26) through which a webbing to be applied to a vehicle passenger passes, the webbing being taken up on the take-up shaft by the take-up shaft being rotated in a take-up direction, and the take-up shaft being rotated in a drawing-out direction by the webbing being drawn out;
a housing chamber (42) that is provided integrally with an end portion of the take-up shaft in an axial direction of the take-up shaft, the housing chamber having an opening opened to an outer side in a radial direction of the take-up shaft, and having one side surface (43) at a side of the take-up direction, an end portion (43A) of the one side surface (43) at a side toward the opening being arranged at a position which is away from a location where the slit (26) is formed in a circumferential direction of the take-up shaft; and
a lock member (46) that is housed in the housing chamber, the lock member being engaged with the one side surface (43) of the housing chamber at a predetermined occasion to regulate rotation of the take-up shaft in the drawing-out direction.

2. The webbing take-up device of claim 1, wherein
the housing chamber further comprises another side surface (44) at a side toward the drawing-out direction, and
the one side surface and the other side surface become more distant from each other approaching the outer side thereof in the radial direction of the take-up shaft, and the one side surface and the other side surface are inclined with respect to a penetrating direction of the slit.

3. The webbing take-up device of claim 1, further comprising a lock portion (41) that is provided integrally with the end portion of the take-up shaft in the axial direction, wherein
the housing chamber is formed in the lock portion such that an outer side in the axial direction of the housing chamber is closed by a wall portion (45) at the outer side in the axial direction of the lock portion, and
the housing chamber has the one side surface (43) and another side surface (44) at a side toward the drawing-out direction.

4. The webbing take-up device of claim 3, wherein the one side surface (43) is formed to be parallel to a penetration direction of the slit.

5. The webbing take-up device of claim 4, wherein the other side surface (44) is formed to be parallel to the penetration direction of the slit.

6. The webbing take-up device of claim 3, wherein the one side surface (43) is formed to be inclined with respect to a penetration direction of the slit.

7. The webbing take-up device of claim 6, wherein
a sliding surface (47), which surface-abuts with and slides on the one side surface (43), is formed at the lock member (46), and
the one side surface (43) intersects with a side surface of the slit (26) extending in the penetration direction of the slit at an intersecting portion (43B) when viewed in the axial direction.

8. The webbing take-up device of claim 7, wherein at the predetermined occasion, the one side surface (43) is engaged with the sliding surface (47) in a range (43C) which is from the end portion (43A) of the one side surface at the side toward the opening to the intersecting portion (43B).

9. The webbing take-up device of any of claims 1-8, wherein at least the end portion (43A) of the one side surface (43) at the side toward the opening is arranged at a position as not to overlap the slit (26) when viewed from the axial direction of the take-up shaft.

## Patentansprüche

1. Gurtaufwickelvorrichtung mit:
einer Aufwickelwelle (20), die mit einem Schlitz (26) versehen ist, durch welchen ein an einem Fahrzeuginsassen anzulegender Gurt hindurchführt, wobei der Gurt auf die Aufwickelwelle aufgewickelt wird, indem die Aufwickelwelle in einer Aufwickelrichtung gedreht wird, und wobei die Aufwickelwelle in einer Herausziehrichtung gedreht wird, indem der Gurt herausgezogen wird;
einer Aufnahmekammer (42), die einstückig mit einem Endabschnitt der Aufwickelwelle in einer Achsrichtung der Aufwickelwelle vorgesehen ist, wobei die Aufnahmekammer eine Öffnung hat, die sich in einer Radialrichtung der Aufwickelwelle zu einer Außenseite öffnet und eine Seitenfläche (43) an einer Seite in der Aufwickelrichtung hat, wobei ein Endabschnitt (43A) der einen Seitenfläche (43) an einer Seite in Richtung zu der Öffnung an einer Position angeordnet ist, die von einer Stelle, an der der Schlitz (26) ausgebildet ist, in einer Umfangsrichtung der Aufwickelwelle entfernt ist; und
einem Verriegelungselement (46), das in der Aufnahmekammer aufgenommen ist, wobei das Verriegelungselement mit der einen Seitenfläche (43) der Aufnahmekammer bei einem vorbestimmten Ereignis in Eingriff gelangt, um die Drehung der Aufwickelwelle in der Herausziehrichtung zu regulieren.

2. Gurtaufwickelvorrichtung gemäß Anspruch 1, wobei
die Aufnahmekammer ferner eine andere Seitenfläche (44) an einer Seite in Richtung der Herausziehrichtung aufweist, und
die eine Seitenfläche und die andere Seitenfläche mit dem Annähern deren äußeren Seite in der Radialrichtung der Aufwickelwelle weiter voneinander beabstandet sind, und die eine Seitenfläche und die andere Seitenfläche mit Bezug auf eine Durchdringungsrichtung des Schlitzes geneigt sind.

3. Gurtaufwickelvorrichtung gemäß Anspruch 1, ferner mit einem Verriegelungsabschnitt (41), der einstückig mit dem Endabschnitt der Aufwickelwelle in der Achsrichtung vorgesehen ist, wobei
die Aufnahmekammer derart in dem Verriegelungsabschnitt ausgebildet ist, dass eine Außenseite in der Achsrichtung der Aufnahmekammer durch einen Wandabschnitt (45) an der Außenseite in der Achsrichtung des Verriegelungsabschnitts geschlossen ist, und
die Aufnahmekammer die eine Seitenfläche (43) und die andere Seitenfläche (44) an einer Seite in Richtung der Herausziehrichtung hat.

4. Gurtaufwickelvorrichtung gemäß Anspruch 3, wobei die eine Seitenfläche (43) so ausgebildet ist, dass sie parallel zu einer Durchdringungsrichtung des Schlitzes verläuft.

5. Gurtaufwickelvorrichtung gemäß Anspruch 4, wobei die andere Seitenfläche (44) so ausgebildet ist, dass sie parallel zu der Durchdringungsrichtung des Schlitzes verläuft.

6. Gurtaufwickelvorrichtung gemäß Anspruch 3, wobei die eine Seitenfläche (43) so ausgebildet ist, dass sie mit Bezug auf eine Durchdringungsrichtung des Schlitzes geneigt ist.

7. Gurtaufwickelvorrichtung gemäß Anspruch 6, wobei
eine Gleitfläche (47), die mit der anderen Gleitfläche (43) in Flächenanlage ist und an dieser gleitet, an dem Verriegelungselement (46) ausgebildet ist, und
die eine Seitenfläche (43) eine Seitenfläche des Schlitzes (26), die sich in der Durchdringungsrichtung des Schlitzes erstreckt, an einem Schnittabschnitt (43B) gesehen in der Achsrichtung schneidet.

8. Gurtaufwickelvorrichtung gemäß Anspruch 7, wobei bei dem vorbestimmten Ereignis die eine Seitenfläche (43) mit der Gleitfläche (47) in einem Bereich (43C) in Eingriff kommt, der von dem Endabschnitt (43A) der einen Seitenfläche an der Seite in Richtung der Öffnung zu dem Schnittabschnitt (43B) verläuft.

9. Gurtaufwickelvorrichtung gemäß einem der Ansprüche 1-8, wobei zumindest der Endabschnitt (43A) der einen Seitenfläche (43) an der Seite in Richtung der Öffnung an einer solchen Position angeordnet ist, dass er den Schlitz (26) gesehen in der Achsrichtung der Aufwickelwelle nicht überlagert.

## Revendications

1. Dispositif de tension de sangle comprenant :
un arbre de tension (20) qui est doté d'une fente (26), par laquelle passe une sangle à appliquer sur un passager de véhicule, la sangle étant tendue sur l'arbre de tension par la rotation de ce dernier dans une direction de tension, et l'arbre de tension étant tourné dans une direction d'étirage par l'étirage de la sangle ;
une chambre de logement (42) qui est prévue intégralement avec une partie d'extrémité de l'arbre de tension dans une direction axiale de l'arbre de tension, la chambre de logement présentant une ouverture ouverte sur un côté extérieur dans une direction radiale de l'arbre de tension, et possédant une surface latérale (43) sur un côté de la direction de tension, une partie d'extrémité (43A) de ladite surface latérale (43) sur un côté vers l'ouverture étant disposée dans une position éloignée d'un endroit où la fente (26) est formée dans une direction circonférentielle de l'arbre de tension ; et
un élément de verrouillage (46) logé dans la chambre de logement, l'élément de verrouillage étant engagé avec ladite surface latérale (43) de la chambre de logement dans une circonstance prédéterminée pour réguler la rotation de l'arbre de tension dans la direction d'étirage.

2. Dispositif de tension de sangle selon la revendication 1, dans lequel
la chambre de logement comprend en outre une autre surface latérale (44) sur un côté vers la direction d'étirage, et
ladite surface latérale et l'autre surface latérale s'éloignent l'une de l'autre lorsqu'elles s'approchent du côté extérieur dans la direction radiale de l'arbre de tension, et l'une et l'autre des surfaces latérales sont inclinées par rapport à une direction de pénétration de la fente.

3. Dispositif de tension de sangle selon la revendication 1, comprenant en outre une partie de verrouillage (41) qui est prévue intégralement avec la partie d'extrémité de l'arbre de tension dans la direction axiale, dans lequel
la chambre de logement est formée dans la partie de verrouillage de sorte qu'un côté extérieur dans la direction axiale de la chambre de logement soit fermé par une partie de paroi (45) sur le côté extérieur dans la direction axiale de la partie de verrouillage, et
la chambre de logement présente ladite surface latérale (43) et une autre surface latérale (44) sur un côté vers la direction d'étirage.

4. Dispositif de tension de sangle selon la revendication 3, dans lequel ladite surface latérale (43) est formée de sorte à être parallèle à une direction de pénétration de la fente.

5. Dispositif de tension de sangle selon la revendication 4, dans lequel l'autre surface latérale (44) est formée de sorte à être parallèle à la direction de pénétration de la fente.

6. Dispositif de tension de sangle selon la revendication 3, dans lequel ladite surface latérale (43) est formée de sorte à être inclinée par rapport à une direction de pénétration de la fente.

7. Dispositif de tension de sangle selon la revendication 6, dans lequel une surface coulissante (47) qui bute et coulisse sur ladite surface latérale (43), est formée sur l'élément de verrouillage (46), et
ladite surface latérale (43) coupe une surface latérale de la fente (26) s'étendant dans la direction de pénétration de la fente sur une partie d'intersection (43B), vu dans la direction axiale.

8. Dispositif de tension de sangle selon la revendication 7, dans lequel dans la circonstance prédéterminée, ladite surface latérale (43) est engagée avec la surface coulissante (47) dans une étendue (43C) qui va de la partie d'extrémité (43A) de l'une surface latérale sur le côté vers l'ouverture jusqu'à la partie d'intersection (43B).

9. Dispositif de tension de sangle selon l'une quelconque des revendications 1 à 8, dans lequel au moins la partie d'extrémité (43A) de ladite surface latérale (43) sur le côté vers l'ouverture est disposée dans une position de sorte à ne pas chevaucher la fente (26), vu depuis la direction axiale de l'arbre de tension.
